# EUROPÄISCHE PATENTSCHRIFT

(11) **EP 2 552 568 B1**
(45) Veröffentlichungstag und Bekanntmachung des Hinweises auf die Patenterteilung: **04.05.2016**
(21) Anmeldenummer: 11706585.4
(22) Anmeldetag: 03.03.2011
(51) Int. Cl.: B01D 53/14, F23J 15/00

(54) **VERFAHREN UND VORRICHTUNG ZUM ABTRENNEN VON KOHLENDIOXID AUS EINEM ABGAS EINER FOSSIL BEFEUERTEN KRAFTWERKSANLAGE**
METHOD AND DEVICE FOR SEPARATING CARBON DIOXIDE FROM AN EXHAUST GAS OF A FOSSIL-FIRED POWER GENERATING PLANT
PROCÉDÉ ET DISPOSITIF DE SÉPARATION DE DIOXYDE DE CARBONE DES GAZ D'ÉCHAPPEMENT D'UNE CENTRALE ÉLECTRIQUE À COMBUSTIBLE FOSSILE

(30) Priorität: 31.03.2010 DE 102010013729
(43) Veröffentlichungstag der Anmeldung: 06.02.2013
(73) Patentinhaber: Siemens Aktiengesellschaft, 80333 München (DE)
(72) Erfinder: ROST, Mike, 91058 Erlangen (DE); SCHNEIDER, Rüdiger, 65817 Eppstein (DE); SCHRAMM, Henning, 60596 Frankfurt am Main (DE)
(86) Internationale Anmeldenummer: PCT/EP2011/053175
(87) Internationale Veröffentlichungsnummer: WO 2011/120754

(56) Entgegenhaltungen:
- US-A1- 2009 263 302
- US-A1- 2009 293 722

## Beschreibung

Die Erfindung betrifft eine Abscheidevorrichtung für Kohlendioxid für den Betrieb in einer fossil befeuerten Kraftwerksanlage, eine fossil befeuerte Kraftwerksanlage mit einer Abscheidevorrichtung für Kohlendioxid, einen Kohlendioxidabscheideprozess für einen fossil befeuerten Kraftwerksprozess und die Verwendung eines Kohlendioxidabscheideprozesses in einer fossil befeuerte Kraftwerksanlage.

Bei fossil befeuerten Kraftwerksanlagen zur Erzeugung elektrischer Energie entsteht durch die Verbrennung eines fossilen Brennstoffes ein kohlendioxidhaltiges Abgas. Dieses kohlendioxidhaltige Abgas wird in der Regel in die Atmosphäre entlassen. Um eine Reduzierung der Kohlendioxid-Emission bei fossil befeuerten Kraftwerksanlagen zu erreichen, kann Kohlendioxid aus dem Abgas abgetrennt werden.

Zur Abtrennung von Kohlendioxid aus einem Gasgemisch sind allgemein verschiedene Methoden bekannt. Insbesondere zum Abtrennen von Kohlendioxid aus einem Abgas nach einem Verbrennungsprozess ist die Methode der Absorption-Desorption gebräuchlich. In großtechnischem Maßstab wird das beschriebene Abtrennen von Kohlendioxid mit dem Absorptions-Desorptionsverfahren mit einem für Kohlendioxid selektiven Waschmittel durchgeführt. Dabei wird das Abgas in einer Absorptionskolonne mit dem selektiven Lösungsmittel in Kontakt gebracht, wobei Kohlendioxid in dem Lösungsmittel gebunden wird. Das von Kohlendioxid weitgehend gereinigte Abgas wird für eine weitere Verarbeitung oder Austragung aus der Absorptionskolonne ausgelassen. Das mit Kohlendioxid beladene Lösungsmittel wird zur Abtrennung des Kohlendioxids und Regenerierung des Lösungsmittels in eine Desorptionskolonne geleitet. Die Abtrennung in der Desorptionskolonne kann thermisch erfolgen. Dabei wird das beladene Lösungsmittel erwärmt, wobei ein Gas-Dampfgemisch aus gasförmigem Kohlendioxid und verdampften Lösungsmittel entsteht - der sogenannte Brüdendampf. Das verdampfte Lösungsmittel wird anschließend von Kohlendioxid separiert. Das separierte Kohlendioxid kann nun in mehreren Stufen verdichtet und gekühlt werden. In flüssigem oder gefrorenem Zustand kann Kohlendioxid dann einer Lagerung oder weiteren Verwertung zugeführt werden. Das regenerierte Lösungsmittel wird erneut zur Absorberkolonne geleitet, wo es wieder Kohlendioxid aus dem kohlendioxidhaltigen Abgas aufnehmen kann.

Ein großer Nachteil des Absorptions-Desorptions-Verfahrens ist es vor allem, dass für die Desorption generell sehr viel Energie aufgewandt werden muss. Diese Energie wird in der Regel dem Kraftwerksprozess in Form von Heizdampf entzogen, was den Gesamtwirkungsgrad der Kraftwerksanlage deutlich schmälert. Um den erforderlichen Energieaufwand für die Desorption zu reduzieren, offenbart der Stand der Technik bereits eine Reihe an Verbesserungsvorschlägen, wobei insbesondere durch eine bessere Integration des Absorptions-DesorptionsProzesses in den Kraftwerksprozess die Energieverwendung optimiert werden soll.

Ein großes Problem ist weiterhin, dass der beschriebene Absorptions-Desorptions-Prozess vor allem aufgrund der notwendigen Baugröße von Absorptions- und Desorptionskolonne sehr träge ist. Eine weitgehend umfassende Abscheidung von Kohlendioxid aus einem Abgas des Kraftwerks kann zudem erst dann effektiv beginnen, wenn durch die Kraftwerksanlage ausreichend Heizdampf bereitgestellt werden kann, und die Desorptionskolonne ausreichend durchgeheizt ist. Bis zu diesem Zeitpunkt können bereits große Mengen an kohlendioxidbeladenem Abgas ungereinigt in die Atmosphäre entlassen sein.

Ein Kraftwerk, beispielsweise ein GuD-Kraftwerk, aber auch zunehmend Dampfkraftwerke, werden zunehmen häufiger vom Netz genommen, z. B. jede Nacht, oder jedes Wochenende. Bei der Abschaltung des Kraftwerks fällt kein kohlendioxidhaltiges Rauchgas mehr an. Jedoch steht auch kein Dampf bzw. Heizdampf mehr zur Verfügung. Wird die Kohlendioxidabscheidevorrichtung ohne weitere Maßnahmen mit dem Kraftwerk zusammen abgeschaltet, kann es zu einer Reihe an Problemen kommen. So kühlt das in der Absorptions-Desorptionsvorrichtung verbleibende, mit Kohlendioxid beladene Lösungsmittel aus, wodurch Löslichkeitsgrenzen unterschritten werden, und es zum Ausfällen und zur Ablagerungen von Produkten kommen kann. Durch sich absetzenden Partikel oder Schwebeteilchen, die im Lösungsmittel enthalten sind, besteht eine erhöhte Verblockungsgefahr.

Ebenso schwierig gestaltet sich das Herunterfahren einer in eine Kraftwerksanlage integrierten Kohlendioxidabscheidevorrichtung. Bei einem geplanten Stillstand der Absorptions-Desorptionsanalge muss das in dem gesamten Lösungsmittelkreislauf enthaltene Lösungsmittel zur Vermeidung der Verblockungsgefahr weitgehend vollständig desorbiert werden. Dazu wird die Absorptionskolonne vom Abgasstrom getrennt, und die Desorptionskolonne weiterhin beheizt. Dadurch wird weiter Kohlendioxid durch die Desorptionskolonne desorbiert und kein weiteres Kohlendioxid an der Absorptionskolonne mehr absorbiert. Nach einer vergleichsweise langen Zeit ist das Lösungsmittel so weit regeneriert, dass die Anlage abgeschaltet werden kann. Bis dahin muss die Kohlendioxidabscheidevorrichtung mit ausreichend hochwertigem Heizdampf versorgt sein. Soll die Kraftwerksanlage erneut angefahren werden, muss das Lösungsmittel wieder erwärmt werden. Bis zum Erreichen der Betriebstemperatur vergeht eine vergleichsweise lange Zeit, in der kein Kohlendioxid abgetrennt werden kann, bzw. ein wirtschaftlicher Abtrenngrad nicht erreicht wird.

Das weitgehend vollständige Desorbieren des Lösungsmittels für einen kurzen Stillstand ist jedoch einerseits unwirtschaftlich, und zudem mit einer langen Wiederanfahrzeit der Desorptionskolonne verbunden. Deshalb wird die Kohlendioxidabscheidevorrichtung bei einem kurzen Stillstand vorzugsweise im Stand-by-Betrieb gehalten. Im Stand-by-Betrieb ist jedoch weiterhin eine Beheizung des Lösungsmittels erforderlich, um einerseits ein schnelles Wiederanfahren zu gewährleisten und andererseits ein mögliches Auskristallisieren oder Ausfällen des Lösungsmittels zu verhindern. Zudem ist es im Stand-by-Betrieb auch notwendig, dass das Lösungsmittel weiterhin umgepumpt wird, also im Kreislauf gefördert wird. Durch das Umpumpen wird verhindert, dass es durch das Stehenbleiben des Solvents in irgendwelchen Zwickeln oder Toträumen zu Verdunstungen oder Verdampfungen kommen kann, die wiederum zu Kristallisation führen. Zwar ist eine Reduzierung der Flussmenge im Stand-by-Betrieb möglich, jedoch nur soweit, dass der gesamte Lösungsmittelkreislauf an jeder Stelle ausreichend umgepumpt wird.

Die US 2009293722 A1 offenbart die Merkmale des Oberbegriffs von Anspruch 1. Darin wird dem Problem des hohen Energieverbrauchs einer CO² Abscheidevorrichtung durch Zugabe einer organischen Aminosäure begegnet.

Es ist daher eine Aufgabe der Erfindung, eine Abscheidevorrichtung für Kohlendioxid für den Betrieb in einer fossil befeuerten Kraftwerksanlage anzugeben, beziehungsweise eine fossil befeuerte Kraftwerksanlage, mit einer Abscheidevorrichtung für Kohlendioxid, die einerseits einen energetisch sparsamen Stand-by-Betrieb ermöglicht und andererseits eine schnelle Wiederinbetriebnahme der Kohlendioxidabscheidevorrichtung gewährleistet, wobei der notwendige Energiebedarf im Stand-by-Betrieb weitgehend reduziert ist.

Weiterhin ist es Aufgabe der Erfindung einen Kohlendioxidabscheideprozess für einen fossil befeuerten Kraftwerksprozess, beziehungsweise die Verwendung eines Kohlendioxidabscheideprozesses in einer fossil befeuerten Kraftwerksanlage anzugeben, der einerseits einen energetisch sparsamen Stand-by-Betriebszustand ermöglicht, und andererseits eine schnelle Wiederinbetriebnahme des Kohlendioxidabscheideprozesses gewährleistet, wobei der notwendige Energiebedarf im Stand-by-Betriebszustand weitgehend reduziert ist.

Gelöst wird die auf eine Vorrichtung gerichtete Aufgabe der Erfindung durch die Merkmale des Anspruchs 1 sowie der Ansprüche 6 und 7.

Die erfindungsgemäße Abscheidevorrichtung für Kohlendioxid, besteht im Wesentlichen aus einer Absorptionseinheit, zur Aufnahme von Rauchgas aus einer fossil befeuerten Kraftwerksanlage, einer Desorptionseinheit und einem Wärmetauscher. Der Wärmetauscher hat eine Primärseite, durch die Wärme aufnehmbar ist, und eine Sekundärseite, durch welche die aufgenommene Wärme wieder abgebbar ist. Der Wärmetauscher ist mit seiner Primärseite in eine Rückführleitung geschaltet, welche die Desorptionseinheit mit der Absorptionseinheit verbindet. Primärseitig zuleitend ist der Wärmetauscher dabei über die eingangsseitige Rückführleitung mit der Desorptionseinheit verbunden, und primärseitig ableitend über die ausgangsseitige Rückführleitung mit der Absorptionseinheit. Mit seiner Sekundärseite ist der Wärmetauscher in eine Zuführleitung geschaltet, welche die Absorptionseinheit mit der Desorptionseinheit verbindet. Sekundärseitig zuleitend ist der Wärmetauscher dabei über eine eingangsseitige Zuführleitung mit der Absorptionseinheit verbunden und ableitend über eine ausgangsseitige Zuführleitung mit der Desorptionseinheit verbunden. Erfindungsgemäß ist nun eine erste Bypassleitung vorgesehen, welche die eingangsseitige Rückführleitung mit der ausgangsseitigen Zuführleitung verbindet, sodass ein wenigstens weitgehend geschlossener erster Kreislauf mit der Desorptionseinheit gebildet ist, und
eine zweite Bypassleitung vorgesehen, welche die eingangsseitige Zuführleitung mit der ausgangsseitigen Rückführleitung verbindet, sodass ein wenigstens weitgehend geschlossener zweiter Kreislauf mit der Absorptionseinheit gebildet ist.

Kern der Erfindung ist es, den eigentlichen Lösungsmittelkreislauf, der im Wesentlichen durch die Absorptionseinheit, die Desorptionseinheit, den Wärmetauscher, die Zuführleitung und die Rückführleitung gebildet wird, in zwei getrennte Lösungsmittelkreisläufe aufzuteilen, in einen ersten Lösungsmittelkreislauf mit der Desorptionseinheit und einen zweiten Lösungsmittelkreislauf mit der Absorptionseinheit. Erzielt wird die Trennung des eigentlichen Lösungmittelkreislaufs in einen ersten Lösungsmittelkreislauf und einen zweiten Lösungsmittelkreislauf durch die erste Bypassleitung und die zweite Bypassleitung. Dabei sind die erste Bypassleitung und die zweite Bypassleitung derart angeordnet, dass diese den Wärmetauscher überbrücken.

Bei dem Wärmetauscher handelt es sich um einen Kreuzstromwärmetauscher, der üblicherweise in derartigen Absorptions-Desorptions-Vorrichtungen zum Einsatz kommt. In dem Wärmetauscher wird ein heißes, regeneriertes Lösungsmittel im Gegenstrom zu einem warmen, beladenen Lösungsmittel geführt, wobei Wärme von dem heißen regenerierten Lösungsmittel an das warme beladene Lösungsmittel abgegeben wird. Durch die weitgehende Überbrückung des Wärmetauschers durch die erste Bypassleitung und die zweite Bypassleitung wird einerseits erreicht, dass ein erster Lösungsmittelkreislauf und ein zweiter Lösungsmittelkreislauf entstehen, wobei die beiden Kreisläufe weitgehend geschlossene Kreisläufe sind, und dass ein Wärmeaustausch zwischen den beiden Kreisläufen weitgehend reduziert wird.

Dies ermöglicht einen besonders vorteilhaften Betrieb der Abscheidevorrichtung im Stand-by-Betriebszustand. Nämlich insbesondere, dass der erste Lösungsmittelkreislauf und der zweite Lösungsmittelkreislauf bei unterschiedlichen Parametern betreiben werden können. Dadurch kann jeder Lösungsmittelteilkreislauf optimal auf seine minimalen Stand-by-Anforderungen hin optimiert werden, ohne dass der jeweilige andere Lösungsmittelkreislauf diese beeinflusst. Dies ermöglicht einerseits eine optimierte Abstimmung des jeweiligen Lösungsmittelteilkreislaufs auf den Stand-by-Betriebszustand, sodass eine schnelle Wiederinbetriebnahme der Kohlendioxidabscheidevorrichtung gewährleistet ist, und gleichzeitig eine Reduzierung des notwendigen Energiebedarfs im Stand-by-Betriebszustand, da weniger Energie zum Beheizen der Abscheidevorrichtung erforderlich ist.

So kann beispielsweise die Desorptionseinheit weiterhin beheizt werden, um bei Rückkehr in den Normalbetriebszustand schnell auf einer optimalen Desorptionstemperatur zu sein, ohne dass die Absorptionseinheit im gleichen Umfang mit beheizt werden muss. Gleichzeitig kann durch die Entkopplung bzw. die Trennung von Absorptionseinheit und Desorptionseinheit die Absorptionseinheit im Stand-by-Betriebszustand bei einer geringeren Temperatur betrieben werden.

Zweckmäßigerweise sind zudem entsprechende Absperr- und Regelarmaturen vorgesehen, um den Lösungsmittelfluss kontrollieren und einstellen zu können. So ist in der Rückführleitung, nach der Ableitung der ersten Bypassleitung, eine erste Armatur vorgesehen, durch welches der Lösungsmittelfluss gemindert oder abgestellt werden kann. Dadurch wird erzielt, dass wenigstens ein Teilstrom des Lösungsmittels durch die erste Bypassleitung geleitet wird. Analog dazu ist in der Zuführleitung, nach der Ableitung des zweiten Bypasses, eine zweite Armatur vorgesehen, durch welche sich der Lösungsmittelfluss gemindert oder abgestellt werden kann. Dadurch wird erzielt, dass wenigstens ein Teilstrom des Lösungsmittels durch die zweite Bypassleitung geleitet wird.

Beispielsweise ist es dadurch möglich, den ersten Lösungsmittelkreislauf mit der Desorptionseinheit bei einer höheren Temperatur zu halten als den zweiten Lösungsmittelkreislauf. Auch könnte durch zwei druckdicht getrennte Lösungsmittelkreisläufe der erste Lösungsmittelkreislauf bei einem anderen Druck gehalten werden, als der zweite Lösungsmittelkreislauf.

Alternativ oder ergänzend dazu besteht die Möglichkeit, die beiden Lösungsmittelkreisläufe bei unterschiedlichen Flussmengen des zu fördernden Lösungsmittels zu betreiben. Der jeweilige geteilte Lösungsmittelkreislauf wird dazu entsprechend den erforderlichen Mindestfördermengen umgepumpt. Dadurch lassen sich in den jeweiligen Lösungsmittelkreisläufen verschiedene Flussmengen für das Umpumpen des Lösungsmittels einstellen, und somit auf den jeweiligen Lösungsmittelkreislauf hin optimieren. Dies ermöglicht die Einsparung elektrischer Energie und reduziert somit die notwendige elektrische Energie für den Stand-by-Betrieb.

In einer weiteren Ausgestaltung der Abscheidevorrichtung ist in die erste Bypassleitung ein erster Hilfswärmetauscher geschaltet. Dieser erste Hilfswärmetauscher ist dann besonders von Vorteil, wenn im Stand-by-Betrieb eine weitere Beheizung der Desorptionseinheit vorgesehen ist, aber z. B. aufgrund der Abschaltung der Kraftwerksanlage kein Heizdampf für den direkten Betrieb der Desorptionseinheit zur Verfügung steht. In diesem Fall kann Wärmeenergie durch den Hilfswärmetauscher in den ersten Lösungsmittelkreislauf, und somit in die Desorptionseinheit eingebracht werden. Der erste Hilfswärmetauscher kann aber auch an jeder anderen beliebigen Stelle des Kreislaufs mit der Desorptionseinheit sein.

Ergänzend oder alternativ ist in einer weiteren Ausführungsform der Abscheidevorrichtung in die zweite Bypassleitung ein zweiter Hilfswärmetauscher geschaltet. Der zweite Hilfswärmetauscher kann auch ohne den ersten Hilfswärmetauscher betrieben werden. Der Zweck des zweiten Hilfswärmetauschers ist dabei analog zum Zweck des ersten Hilfswärmetauschers, und ermöglicht im Stand-by-Betrieb eine Beheizung der Absorptionseinheit. Auch der zweite Hilfswärmetauscher kann an jeder anderen beliebigen Stelle des Kreislaufs mit der Absorptionseinheit angeordnet sein.

In einer besonderen Weiterentwicklung der Abscheidevorrichtung ist der erste Hilfswärmetauscher der ersten Bypassleitung mit dem zweiten Hilfswärmetauscher der zweiten Bypassleitung so verbunden, dass Wärme von dem ersten Hilfswärmetauscher in den zweiten Hilfswärmetauscher übertragbar ist. Dies ermöglicht einen Stand-by-Betrieb der Abscheidevorrichtung, bei dem einerseits zwei getrennte Lösungsmittelkreisläufe eingestellt sind, und andererseits die Desorptionseinheit und die Absorptionseinheit weiterhin beheizt werden. Dabei wird, wie im Normalbetriebszustand, über einen Sumpfkocher Wärme in Form von Heizdampf in die Desorptionseinheit und somit in den ersten Lösungsmittelkreislauf eingebracht. Zur Beheizung der Absorptionseinheit wird nun Wärme von dem ersten Lösungsmittelkreislauf durch den ersten Hilfswärmetauscher über eine Leitung an den zweiten Hilfswärmetauscher, und folglich an den zweiten Lösungsmittelkreislauf und somit in die Absorptionseinheit eingebracht.

Bei einer weiteren vorteilhaften Ausgestaltung der Abscheidevorrichtung ist in die erste Bypassleitung ein erstes Ventil geschaltet ist, und in die zweite Bypassleitung ein zweites Ventil geschaltet. Bei den Ventilen handelt es sich um Regelventile oder Absperrventile, durch die es möglich ist, die Flussmenge an Lösungsmittel des jeweiligen Bypasses einzustellen. Im Stand-by-Betrieb sind das erste Ventil und das zweite Ventil wenigstens teilweise oder vollständig geöffnet, und somit der erste Bypass und der zweite Bypass wenigstens teilweise freigegeben. Im Normalbetriebszustand sind das erste Ventil und das zweite Ventil weitgehend geschlossen, sodass der erste Bypass und der zweite Bypass weitgehend verschlossen sind.

Die fossil befeuerte Kraftwerksanlage in der die Abscheidevorrichtung für Kohlendioxid integriert ist, oder der sie nachgeschaltet ist, ist vorzugsweise ein Dampfkraftwerk. Das Dampfkraftwerk umfasst dabei einen fossil befeuerten Kessel, eine durch den Dampf des Kessels betriebene Dampfturbine, einen durch die Dampfturbine über eine Welle angetriebenen Generator und die dem Kessel abgasseitig nachgeschaltete Abscheidevorrichtung für Kohlendioxid. Alternativ kann die fossil befeuerte Kraftwerksanlage, auch ein GuD-Kraftwerk (Gas- und Dampfkraftwerk) sein. Das GuD-Kraftwerk umfasst dabei eine fossil befeuerte Gasturbine, einen in den Abhitzekanal der Gasturbine geschalteten Abhitzedampferzeuger, eine durch den Dampf des Abhitzedampferzeugers betriebene Dampfturbine, wenigstens einen durch die Gasturbine und die Dampfturbine über eine Welle angetriebenen Generator und die der Gasturbine abgasseitig nachgeschaltete Abscheidevorrichtung für Kohlendioxid.

Die auf ein Verfahren gerichtete Aufgabe der Erfindung wird gelöst durch die Merkmale des Anspruchs 8 und 17.

Der erfindungsgemäße Kohlendioxidabscheideprozess für einen fossil befeuerten Kraftwerksprozess umfasst im Wesentlichen einen Absorptionsprozess und einen Desorptionsprozess. Bei dem Kohlendioxidabscheideprozess wird unterschieden zwischen einem Normalbetriebszustand und einem vom Normalbetriebszustand abweichenden Sonderbetriebszustand. Im Sonderbetriebszustand wird ein erster Bypass freigeschaltet, sodass ein regeneriertes Lösungsmittel aus dem Desorptionsprozess wenigstens teilweise wieder in den Desorptionsprozess zurückgeführt wird. Ferner wird ein zweiter Bypass freigeschaltet, sodass ein beladenes Lösungsmittel aus dem Absorptionsprozess wenigstens teilweise in den Absorptionsprozess zurückgeführt wird.

Zudem ist es nach wie vor möglich, dass ein Teil der Wärme von einem regenerierten Lösungsmittel des Desorptionsprozesses an ein beladenes Lösungsmittel des Absorptionsprozesses übertragen wird.

Wesentlich dabei ist, dass der ursprüngliche Lösungsmittelkreislauf, der im Normalbetriebszustand insbesondere durch die Verbindung zwischen Absorptionsprozess und Desorptionsprozess gebildet wird, im Sonderbetriebszustand in zwei weitgehend getrennte Lösungsmittelkreisläufe aufgeteilt wird. Erzielt wird diese Aufteilung durch den ersten Bypass und den zweiten Bypass. Durch den ersten Bypass wird ein weitgehend geschlossener erster Lösungsmittelkreislauf mit dem Desorptionsprozess, und durch den zweiten Bypass ein weitgehend geschlossener zweiter Lösungsmittelkreislauf mit dem Absorptionsprozess gebildet. Durch die beiden weitgehend voneinander getrennten Lösungsmittelkreisläufe ist es möglich, dass ein Wärmeaustausch zwischen den beiden Lösungsmittelkreisläufen weitgehend reduziert wird. Durch diese Ausgestaltung können der erste Lösungsmittelkreislauf und der zweite Lösungsmittelkreislauf vorteilhaft bei unterschiedlichen Parametern betreiben werden. So kann beispielsweise die Desorptionseinheit weiterhin beheizt werden, um bei Rückkehr in den Normalbetriebszustand schnell auf einer optimalen Desorptionstemperatur zu sein, ohne dass die Absorptionseinheit im gleichen Umfang mit beheizt werden muss. Gleichzeitig kann durch die Entkopplung bzw. die Trennung von Absorptionsprozess und Desorptionsprozess die Absorptionseinheit im Stand-by-Betriebszustand bei einer geringeren Temperatur betrieben werden. Auch könnte durch zwei druckdicht getrennte Lösungsmittelkreisläufe der erste Lösungsmittelkreislauf bei einem anderen Druck gehalten werden, als der zweite Lösungsmittelkreislauf. Durch diese Maßnahem ist gewährleistet, dass die Anlage schnell in den Stand-by-Betriebszustand gehen kann, schnell wieder angefahren werden kann, und zudem im Stand-by-Betriebszustand nur wenig Energie benötigt, da nur die tatsächlichen Wärmeverluste des Lösungsmittels ausgeglichen werden.

Mit den Merkmalen "beladenes Lösungsmittel" und "regeneriertes Lösungsmittel" soll insbesondere der Ort des jeweiligen Lösungsmittels verdeutlicht werden. Regeneriertes Lösungsmittel befindet sich im Bereich des Desorptionsprozesses, da Lösungsmittel im Desorptionsprozess regeneriert wird, und beladenes Lösungsmittel befindet sich im Bereich des Absorptionsprozesses, da es im Absorptionsprozess Kohlendioxid absorbiert. Im Sonderbetriebszustand kann sich jedoch ein Zustand einstellen, bei dem das beladene Lösungsmittel die gleiche Beladung an Kohlendioxid hat wie das regenerierte Lösungsmittel.

Der Grundgedanke, den ursprünglichen Lösungsmittelkreislauf in zwei voneinander getrennte Lösungsmittelkreisläufe zu trennen, ermöglicht einen Betrieb, bei dem nur ein Teil des Lösungsmittels in den zwei voneinander getrennten Lösungsmittelkreisläufen geführt wird. Der andere Teil wird wie auch im Normalbetriebszustand im ursprünglichen Lösungsmittelkreislauf geführt. Dies kann z. B. besonders von Vorteil sein, wenn im Stand-by-Betriebszustand der Energieeintrag in den Absorptionsprozess innerhalb des Desorptionsprozesses erfolgt, und der Absorptionsprozess im geringeren Maße mit beheizt werden soll. In diesem Fall wird ein Teil des Lösungsmittels von dem ersten Lösungsmittelkreislauf in den zweiten Lösungsmittelkreislauf geleitet.

Vorteilhaft hat sich eine Ausführung des Kohlendioxidabscheideprozesses bewährt, bei der zwischen 80 % und 98 % des Lösungsmittels aus dem Desorptionsprozess wieder durch den ersten Bypass zurück in den Desorptionsprozess geführt werden, und somit den ersten Lösungsmittelkreislauf bilden, und zwischen 2 % und 20 % dem Absorptionsprozess zugeführt werden, und somit wie der ursprüngliche Lösungsmittelkreislauf im Normalbetriebszustand geführt wird. Dadurch wird Wärme aus dem Desorptionsprozess in den Absorptionsprozess eingebracht. Folglich werden wiederum zwischen 80 % und 98 % des Lösungsmittels aus dem Absorptionsprozess wieder durch den zweiten Bypass zurück in den Absorptionsprozess geführt werden, und zwischen 2 % und 20 % dem Desorptionsprozess zugeführt. Der Prozentsatz bezieht sich dabei auf die umgepumpte Menge an Lösungsmittel. Die Zuführung in den Absorptionsprozess erfolgt über einen vorgeschalteten Wärmetauscherprozess.

Besonders vorteilhaft hat sich ein Verhältnis von 10 % zu 90 % erwiesen. Dabei werden 10 % des Lösungsmittels aus dem Desorptionsprozess in den Absorptionsprozess geleitet, und 90 % über den Bypass wieder zurück in den Desorptionsprozess. Durch dieses Verhältnis ist beispielsweise bei einer Temperatur im Desorptionsprozess von ca. 100 °C eine Temperatur im Absorptionsprozess von ca. 40 °C einstellbar. Durch die geringere Temperatur im Absorptionsprozess wird im Sonderbetriebszustand Heizenergie eingespart.

In einer alternativen Ausführung des Kohlendioxidabscheideprozesses wird das regenerierte Lösungsmittel aus dem Desorptionsprozess vollständig über den ersten Bypass in den Desorptionsprozess zurückgeführt, und das beladene Lösungsmittel aus dem Absorptionsprozess wieder vollständig über den zweiten Bypass in den Absorptionsprozess zurückgeführt. Es erfolgt also keine Aufteilung des ersten Lösungsmittelkreislaufes und des zweiten Lösungsmittelkreislaufs in Teilströme. Jedoch ist vorgesehen, dass das regenerierte Lösungsmittel aus dem ersten Lösungsmittelkreislauf mit dem beladenen Lösungsmittel aus dem zweiten Lösungsmittelkreislauf im Wärmetausch geführt wird, sodass das beladene Lösungsmittel erwärmt wird. Da die beiden Lösungsmittelkreisläufe voneinander getrennt sind, kann im Sonderbetriebszustand der Desorptionsprozess folglich bei einem anderen Druck betrieben werden als der Absorptionsprozess, wodurch sich eine optimierte Betriebsweise des jeweiligen Prozesses einstellen lässt.

Vorteilhafterweise wird im Sonderbetriebszustand des Kohlendioxidabscheideprozesses im Absorber des Absorptionsprozesses eine mittlere Temperatur von zwischen 30°C und 70°C, und im Desorber des Desorptionsprozesses eine mittlere Temperatur von zwischen 80°C und 120°C eingestellt. Besonders von Vorteil haben sich dabei eine Temperatur von ca. 40 °C im Absorber und eine Temperatur von ca. 100 °C im Desorber herausgestellt.

Zweckmäßigerweise kommt in dem Kohlendioxidabscheideprozess eine Aminosäuresalzlösung als Lösungsmittel zum Einsatz.

In einer Weiterentwicklung des Kohlendioxidabscheideprozesses wird im Sonderbetriebszustand gegenüber dem Normalbetriebszustand weiterhin die Flussmenge des beladenen Lösungsmittels im Absorptionsprozess und/oder des regenerierten Lösungsmittels im Desorptionsprozess reduziert. Die Flussmenge definiert die in dem Prozess umgepumpte Lösungsmittelmenge. Da im Sonderbetriebszustand keine oder nur eine eingeschränkte Absorption von Kohlendioxid stattfindet, kann die Flussmenge reduziert werden. Durch die Trennung der Lösungsmittelkreisläufe ist es möglich, die Flussmenge des jeweiligen Lösungsmittels auf den jeweiligen Lösungsmittelkreislauf hin zu optimieren, ohne dass der jeweilige andere Lösungsmittelkreislauf stark beeinflusst wird. Dadurch wird Energie für die verwendeten Pumpen eingespart.

Durch die ausgesetzte oder eingeschränkte Absorption von Kohlendioxid während des Sonderbetriebszustands ist es gegenüber dem Normalbetriebszustand zweckmäßig, wenn keine Kühlung des in den Absorptionsprozess eingeleiteten Lösungsmittels erfolgt. Im Normalbetriebszustand erfolgt die Kühlung durch einen Lean-Solvent-Kühler. Durch die Kühlung des Lösungsmittels vor Eintritt in den Absorptionsprozess ist im Absorptionsprozess dadurch eine höhere Beladung des Lösungsmittels mit Kohlendioxid erzielbar. Da jedoch im Sonderbetriebszustand weniger oder gar kein Kohlendioxid absorbiert werden muss, kann auf die Kühlung verzichtet werden, wodurch Energie eingespart wird.

Bei dem Sonderbetriebszustand handelt es sich um einen Stand-by-Betriebszustand. Der Sonderbetriebszustand wird vorzugsweise dann betrieben, wenn der fossil befeuerte Kraftwerksprozess ganz oder teilweise heruntergefahren wird. Der Sonderbetriebszustand beginnt dann, wenn nur noch ein reduziertes oder gar kein kohlendioxidhaltiges Abgas mehr im Absorptionsprozess ankommt. In diesem Zusammenhang kann der Abgaskühler abgeschaltet werden.

Vorzugsweise kommt der Kohlendioxidabscheideprozess in einer fossil befeuerten Kraftwerksanlage zum Einsatz.

Folgend werden Ausführungsbeispiele der Erfindung anhand von beigefügten schematischen Zeichnungen näher erläutert. Es zeigt:
- FIG 1: Ein Ausführungsbeispiel eines Kohlendioxidabscheideprozess
- FIG 2: Ein Ausführungsbeispiel einer Kohlendioxidabscheidevorrichtung

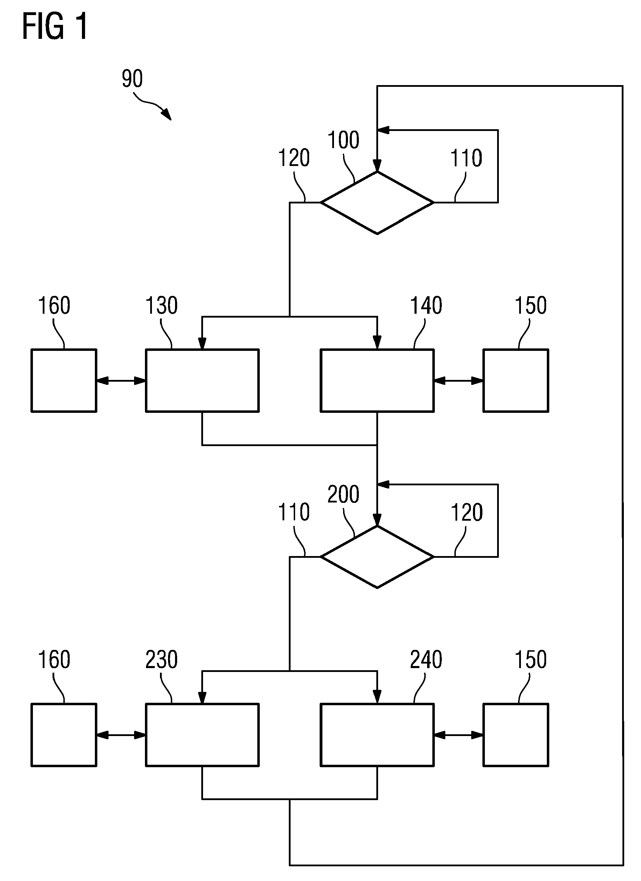

In Figur 1 ist ein Kohlendioxidabscheideprozess 90 dargestellt. Der Prozess beginnt mit dem Entscheidungsschritt 100. Mit dem Entscheidungsschritt 100 wird festgelegt, ob der Kohlendioxidabscheideprozess 90 vom Normalbetriebszustand 110 in den Sonderbetriebszustand 120 gewechselt werden soll. Ist der Sonderbetriebszustand 120 festgelegt werden folgende Prozesse ausgeführt:
- Freischalten eines ersten Bypasses 130
- Freischalten eines zweiten Bypasses 140

Die Reihenfolge der auszuführenden Prozesse kann variieren. Durch das Freischalten des ersten Bypasses 130 wird ein regeneriertes Lösungsmittel aus dem Desorptionsprozess 160 wenigstens teilweise wieder in den Desorptionsprozess 160 zurück geführt wird. Durch das Freischalten des zweiten Bypasses 140 wird ein beladenes Lösungsmittel aus dem Absorptionsprozess 150 wenigstens teilweise in den Absorptionsprozess 150 zurückgeführt. Nicht dargestellt ist ein weiterer Prozessschritt, bei dem von dem regenerierten Lösungsmittel des Desorptionsprozesses 160 Wärme an das beladene Lösungsmittel des Absorptionsprozesses 150 abgegeben wird. Dadurch wird eine wenigstens teilweise Beheizung des Ansorptionsprozesses 150 durch den Desorptionsprozess 160 erreicht. Der Kohlendioxidabscheideprozess 90 befindet sich nun im Sonderbetriebszustand 120.

Dem Entscheidungsschritt 100 folgt ein Entscheidungsschritt 200, mit dem festgelegt wird, ob der Kohlendioxidabscheideprozess 90 vom Sonderbetriebszustand 120 wieder zurück in den Normalbetriebszustand 110 gewechselt werden soll. Wird der Normalbetriebszustand 110 festgelegt, werden folgende Prozesse ausgeführt:
- Verschließen des ersten Bypasses 230
- Verschließen des zweiten Bypasses 240

Die Reihenfolge der auszuführenden Prozesse kann variieren. Durch das Verschließen des ersten Bypasses 130 wird das regenerierte Lösungsmittel aus dem Desorptionsprozess 160 wieder in den Absorptionsprozess 150 geführt. Durch das Verschließen des zweiten Bypasses 140 wird das beladene Lösungsmittel aus dem Absorptionsprozess 150 wieder in den Desorptionsprozess 160 geführt. Der Kohlendioxidabscheideprozess 90 befindet sich nun wieder im Normalbetriebszustand 110.

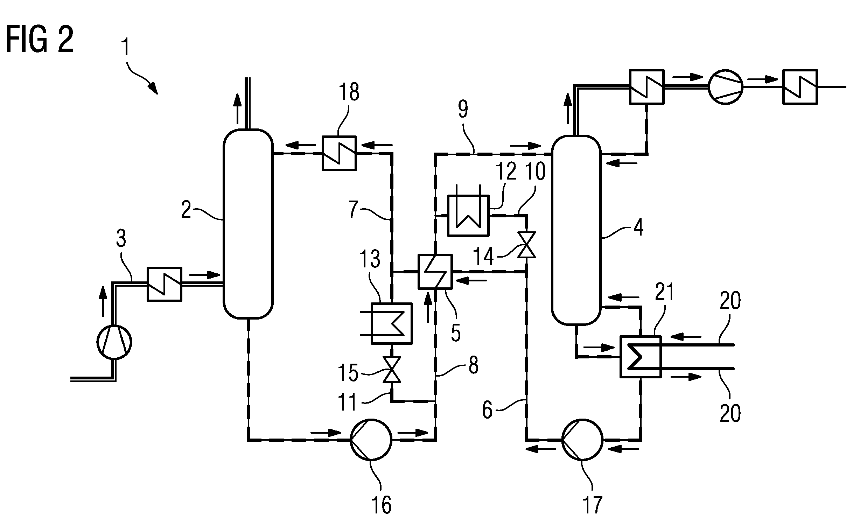

In Figur 2 ist eine Abscheidevorrichtung 1 für Kohlendioxid dargestellt. Nicht gezeigt ist die Kraftwerksanlage, in welche die Abscheidevorrichtung 1 integriert ist. Verbunden ist die Abscheidevorrichtung 1 mit der Kraftwerksanlage über einen Strömungskanal für Rauchgas 3, und über eine Heizdampfleitung 20. Durch den Strömungskanal für Rauchgas 3 wird der Abscheidevorrichtung 1 im Normalbetriebszustand ein kohlendioxidhaltiges Rauchgas zugeführt. Über die Heizdampfleitung 20 wird die Abscheidevorrichtung im Betrieb mit Heizdampf versorgt. Dazu wird der Heizdampf in einen Sumpfkocher 21 eingebracht. Nicht gezeigt ist die Einbringung des Heizdampfes in beispielsweise eine seitliche Heizvorrichtung.

Die Absorptionseinheit 1 besteht im Wesentlichen aus einer Absorptionseinheit 2, einer Desorptionseinheit 4, einem Wärmetauscher 5, einer ersten Bypassleitung 10 und eine zweite Bypassleitung 11. Der Wärmetauscher 5 weist eine Primärseite zur Aufnahme von Wärme und eine Sekundärseite zur Abgabe von Wärme auf. Der Wärmetauscher ist primärseitig zuleitend über eine eingangsseitige Rückführleitung 6 mit der Desorptionseinheit 4 verbunden, und ableitend über eine ausgangsseitige Rückführleitung 7 mit der Absorptionseinheit 2 verbunden. Sekundärseitig zuleitend ist der Wärmetauscher 5 über eine eingangsseitige Zuführleitung 8 mit der Absorptionseinheit 2 verbunden, und ableitend über eine ausgangsseitige Zuführleitung 9 mit der Desorptionseinheit 4 verbunden. Durch diese Verschaltung ist ein Kreislauf zwischen Absorptionseinheit 2 und Desorptionseinheit 4 über den Wärmetauscher 5 für ein Lösungsmittel gebildet.

Weiterhin ist eine erste Bypassleitung 10 vorhanden, in die ein erstes Ventil 14 und ein erster Hilfswärmetauscher 12 geschaltet sind. Die erste Bypassleitung 10 verbindet die eingangsseitige Rückführleitung 6 mit der ausgangsseitigen Zuführleitung 9. Durch die erste Bypassleitung 10 ist ein wenigstens weitgehend geschlossener erster Kreislauf mit der Desorptionseinheit gebildet. Zudem ist eine zweite Bypassleitung 11 vorhanden, in den ein zweites Ventil 15 und ein zweiter Hilfswärmetauscher 13 geschaltet sind. Die zweite Bypassleitung 11 verbindet die eingangsseitige Zuführleitung 8 mit der ausgangsseitigen Rückführleitung 7. Durch die zweite Bypassleitung 11 ist ein wenigstens weitgehend geschlossener zweiter Kreislauf mit der Absorptionseinheit gebildet.

Nicht gezeigt ist eine Verbindungsleitung, die den ersten Hilfswärmetauscher 12 mit dem zweiten Hilfswärmetauscher 13 verbindet. Durch eine derartige Verbindungsleitung ist Wärme von dem ersten Hilfswärmetauscher 12 an den zweiten Hilfswärmetauscher 13 übertragbar.

In die eingangsseitige Rückführleitung 6 ist eine erste Pumpe 17, und in die eingangsseitige Zuführleitung 8 ist eine zweite Pumpe 16 geschaltet. Durch die erste Pumpe 17 und die zweite Pumpe 16 sind jeweils Flussmengen einstellbar, mit denen Lösungsmittel im ersten Kreislauf und im zweiten Kreislauf umgepumpt werden. Nicht dargestellt sind diverse weitere Armaturen, die in Zuführleitung oder in die Rückführleitung geschaltet sein können, wie beispielsweise weitere Ventile oder Regelvorrichtungen.

In die ausgangsseitige Rückführleitung 7 ist ein Kühler 18 geschaltet. Der Kühler 18 kann im Stand-by-Betriebszustand in seiner Leistung reduziert oder ausgeschaltet werden.

Durch die beiden weitgehend voneinander getrennten Kreisläufe ist es möglich, dass ein Wärmeaustausch zwischen den beiden Kreisläufen weitgehend reduziert wird. Durch diese Maßnahme können der erste Kreislauf und der zweite Kreislauf vorteilhaft bei unterschiedlichen Parametern betreiben werden. Dies ermöglicht einerseits eine optimierte Abstimmung des jeweiligen Kreislaufs auf den Stand-by-Betriebszustand, sodass eine schnelle Wiederinbetriebnahme der Abscheidevorrichtung 1 gewährleistet ist, und gleichzeitig eine Reduzierung des notwendigen Energiebedarfs im Stand-by-Betriebszustand, da weniger Energie zum Beheizen der Abscheidevorrichtung 1 und zum Umpumpen des Lösungsmittels erforderlich ist.

## Patentansprüche

1. Abscheidevorrichtung (1) für Kohlendioxid, umfassend eine Absorptionseinheit (2), zur Aufnahme von Rauchgas aus einer fossil befeuerten Kraftwerksanlage, einer Desorptionseinheit (4) und einem Wärmetauscher (5), wobei der Wärmetauscher (5) primärseitig über eine eingangsseitige Rückführleitung (6) mit der Desorptionseinheit (4) verbunden ist, und über eine ausgangsseitige Rückführleitung (7) mit der Absorptionseinheit (2) verbunden ist, und sekundärseitig über eine eingangsseitige Zuführleitung (8) mit der Absorptionseinheit (2) und über eine ausgangsseitige Zuführleitung (9) mit der Desorptionseinheit (4) verbunden ist, **dadurch gekennzeichnet, dass** eine erste Bypassleitung (10) vorgesehen ist, welche die eingangsseitige Rückführleitung (6) mit der ausgangsseitigen Zuführleitung (9) verbindet, sodass ein wenigstens weitgehend geschlossener erster Kreislauf mit der Desorptionseinheit (4) gebildet ist, und dass eine zweite Bypassleitung (11) vorgesehen ist, welche die eingangsseitige Zuführleitung (8) mit der ausgangsseitigen Rückführleitung (7) verbindet, sodass ein wenigstens weitgehend geschlossener zweiter Kreislauf mit der Absorptionseinheit (2) gebildet ist.

2. Abscheidevorrichtung (1) nach Anspruch 1, **dadurch gekennzeichnet, dass** in die erste Bypassleitung (10) ein erster Hilfswärmetauscher (12) geschaltet ist.

3. Abscheidevorrichtung (1) nach Anspruch 1 oder 2, **dadurch gekennzeichnet, dass** in die zweite Bypassleitung (11) ein zweiter Hilfswärmetauscher (13) geschaltet ist.

4. Abscheidevorrichtung (1) nach Anspruch 3, **dadurch gekennzeichnet, dass** der erste Hilfswärmetauscher (12) der ersten Bypassleitung (10) mit dem zweiten Hilfswärmetauscher (13) der zweiten Bypassleitung (11) so verbunden ist, dass Wärme von dem ersten Hilfswärmetauscher (12) in den zweiten Hilfswärmetauscher (13) übertragbar ist.

5. Abscheidevorrichtung (1) nach einem der Ansprüche 1 bis 4, **dadurch gekennzeichnet, dass** in die erste Bypassleitung (10) ein erstes Ventil (14) geschaltet ist, und dass in die zweite Bypassleitung (11) ein zweites Ventil (15) geschaltet ist.

6. Fossil befeuerte Kraftwerksanlage, ausgestaltet als Dampfkraftwerk, umfassend einen fossil befeuerten Kessel, eine durch den Dampf des Kessels betriebene Dampfturbine, einen durch die Dampfturbine über eine Welle angetriebenen Generator, und einer dem Kessel abgasseitig nachgeschalteten Abscheidevorrichtung (1) für Kohlendioxid nach einem der Ansprüche 1 bis 5.

7. Fossil befeuerte Kraftwerksanlage, ausgestaltet als Gasund Dampfkraftwerk, umfassend eine fossil befeuerte Gasturbine, einen in den Abhitzekanal der Gasturbine geschalteten Abhitzedampferzeuger, eine durch den Dampf des Abhitzedampferzeugers betriebene Dampfturbine, wenigstens einen durch die Gasturbine und die Dampfturbine über eine Welle angetriebenen Generator, und einer der Gasturbine abgasseitig nachgeschalteten Abscheidevorrichtung (1) für Kohlendioxid nach einem der Ansprüche 1 bis 5.

8. Kohlendioxidabscheideprozess (90) für einen fossil befeuerten Kraftwerksprozess, umfassend einen Absorptionsprozess (150), einen Desorptionsprozess (160) und einen Wärmetauscher, wobei der Wärmetauscher primärseitig über eine eingangsseitige Rückführleitung mit dem Desorptionsprozess (160) verbunden ist, und über eine ausgangsseitige Rückführleitung mit dem Absorptionsprozess (150) verbunden ist, und sekundärseitig über eine eingangsseitige Zuführleitung mit dem Absorptionsprozess (150) und über eine ausgangsseitige Zuführleitung mit dem Desorptionsprozess (160) verbunden ist, wobei in einem vom Normalbetriebszustand (110) abweichenden Sonderbetriebszustand (120),
- ein erster Bypass (130) freigeschaltet wird, welcher die eingangsseitige Rückführleitung mit der ausgangsseitigen Zuführleitung verbindet, sodass ein wenigstens weitgehend geschlossener erster Kreislauf mit dem Desorptionsprozess (160) gebildet, und ein regeneriertes Lösungsmittel aus dem Desorptionsprozess (160) wenigstens teilweise wieder in den Desorptionsprozess (160) zurück geführt wird,
- ein zweiter Bypass (140) freigeschaltet wird, welcher die eingangsseitige Zuführleitung mit der ausgangsseitigen Rückführleitung verbindet, sodass ein wenigstens weitgehend geschlossener zweiter Kreislauf mit dem Absorptionsprozess (150) gebildet, undein beladenes Lösungsmittel aus dem Absorptionsprozess (150) wenigstens teilweise in den Absorptionsprozess (150) zurück geführt wird.

9. Kohlendioxidabscheideprozess (90) nach Anspruch 8, wobei Wärme von einem regenerierten Lösungsmittel des Desorptionsprozesses (160) an ein beladenes Lösungsmittel des Absorptionsprozesses (160) übertragen wird.

10. Kohlendioxidabscheideprozess (90) nach Anspruch 8 oder 9, wobei zwischen 80 % und 98 % des regenerierten Lösungsmittels aus dem Desorptionsprozess (160) wieder durch den ersten Bypass (130) zurück in den Desorptionsprozess (160) geführt werden, und zwischen 2 % und 20 % dem Absorptionsprozess (160) zugeführt werden, sodass Wärme in den Absorptionsprozess (150) eingebracht wird, und wobei zwischen 80 % und 98 % des beladenen Lösungsmittels aus dem Absorptionsprozess (150)wieder durch den zweiten Bypass (140) zurück in den Absorptionsprozess (150) geführt werden, und zwischen 2 % und 20 % dem Desorptionsprozess (160) zugeführt werden.

11. Kohlendioxidabscheideprozess (90) nach Anspruch 8 oder 9, wobei das regenerierte Lösungsmittel aus dem Desorptionsprozess (160) wieder vollständig über den ersten Bypass (130) in den Desorptionsprozess (160) zurückgeführt wird, und das beladene Lösungsmittel aus dem Absorptionsprozess (150) wieder vollständig über den zweiten Bypass (140) in den Absorptionsprozess (150) zurückgeführt wird, und wobei das regenerierte Lösungsmittel mit dem beladenen Lösungsmittel im Wärmetausch geführt wird, sodass das beladene Lösungsmittel erwärmt wird.

12. Kohlendioxidabscheideprozess (90) nach einem der Ansprüche 8 bis 11, wobei sich durch den Sonderbetriebszustand (120) im Absorber des Absorptionsprozesses (150) eine mittlere Temperatur (T₁₀) von zwischen 30 °C und 70 °C eingestellt wird und im Desorber des Desorptionsprozesses (160) eine mittlere Temperatur (T₂₀) von zwischen 80 °C und 120 °C eingestellt wird.

13. Kohlendioxidabscheideprozess (90) nach einem der Ansprüche 8 bis 12, wobei als Lösungsmittel eine Aminosäuresalzlösung verwendet wird.

14. Kohlendioxidabscheideprozess (90) nach einem der Ansprüche 8 bis 13, wobei im Sonderbetriebszustand (120) gegenüber dem Normalbetriebszustand (110) weiterhin die Flussmenge (M) des beladenen Lösungsmittels im Absorptionsprozess (150) und/oder des regenerierten Lösungsmittels im Desorptionsprozess (160) reduziert wird.

15. Kohlendioxidabscheideprozess (90) nach einem der Ansprüche 8 bis 14, wobei im Sonderbetriebszustand (120) gegenüber dem Normalbetriebszustand (110) keine Kühlung des in den Absorptionsprozess (150) eingeleiteten Lösungsmittels erfolgt.

16. Kohlendioxidabscheideprozess (90) nach einem der Ansprüche 8 bis 15, wobei der Sonderbetriebszustand (120) dann gefahren wird, wenn der fossil befeuerte Kraftwerksprozess ganz oder teilweise heruntergefahren wird.

17. Verwendung des Kohlendioxidabscheideprozesses (90) nach einem der Ansprüche 8 bis 16 in einer fossil befeuerten Kraftwerksanlage.

## Claims

1. Separation apparatus (1) for carbon dioxide, comprising an absorption unit (2) for absorbing flue gas from a fossil-fueled power station, a desorption unit (4) and a heat exchanger (5), wherein the heat exchanger (5) on the primary side is connected via an inlet-side feedback line (6) to the desorption unit (4), and is connected via an outlet-side feedback line (7) to the absorption unit (2), and on the secondary side is connected via an inlet-side feed line (8) to the absorption unit (2), and is connected via an outlet-side feed line (9) to the desorption unit (4), **characterized in that** provision is made for a first bypass line (10) which connects the inlet-side feedback line (6) to the outlet-side feed line (9) so that an at least largely closed first circuit with the desorption unit (4) is formed, and **in that** provision is made for a second bypass line (11) which connects the inlet-side feed line (8) to the outlet-side feedback line (7) so that an at least largely closed second circuit with the absorption unit (2) is formed.

2. Separation apparatus (1) according to Claim 1, **characterized in that** a first auxiliary heat exchanger (12) is connected into the first bypass line (10).

3. Separation apparatus (1) according to Claim 1 or 2, **characterized in that** a second auxiliary heat exchanger (13) is connected into the second bypass line (11).

4. Separation apparatus (1) according to Claim 3, **characterized in that** the first auxiliary heat exchanger (12) of the first bypass line (10) is connected to the second auxiliary heat exchanger (13) of the second bypass line (11) so that heat can be transferred from the first auxiliary heat exchanger (12) to the second auxiliary heat exchanger (13).

5. Separation apparatus (1) according to one of Claims 1 to 4, **characterized in that** a first valve (14) is connected into the first bypass line (10), and **in that** a second valve (15) is connected into the second bypass line (11).

6. Fossil-fueled power station, designed as a steam power plant, comprising a fossil-fueled boiler, a steam turbine which is operated by the steam of the boiler, a generator which is driven by the steam turbine via a shaft, and a separation apparatus (1) for carbon dioxide, which is connected downstream to the boiler on the flue gas side, according to one of Claims 1 to 5.

7. Fossil-fueled power station, designed as a gas and steam power plant, comprising a fossil-fueled gas turbine, a heat recovery steam generator which is connected into the waste heat duct of the gas turbine, a steam turbine which is operated by the steam of the heat recovery steam generator, at least one generator which is driven by the gas turbine and the steam turbine via a shaft, and a separation apparatus (1) for carbon dioxide, which is connected downstream to the gas turbine on the exhaust gas side, according to one of Claims 1 to 5.

8. Carbon dioxide separation process (90) for a fossil-fueled power station process, comprising an absorption process (150) a desorption process (160) and a heat exchanger, wherein the heat exchanger on the primary side is connected via an inlet-side feedback line to the desorption process (160), and is connected via an outlet-side feedback line to the absorption process (150), and on the secondary side is connected via an inlet-side feed line to the absorption process (150), and is connected via an outlet-side feed line to the desorption process (160), wherein in a special operating state (120) which deviates from the normal operating state (110),
- a first bypass (130) is opened which connects the inlet-side feedback line to the outlet-side feed line so that an at least largely closed first circuit with the desorption process (160) is formed, and a regenerated solvent from the desorption process (160) is at least partially fed back again into the desorption process (160),
- a second bypass (140) is opened which connects the inlet-side feed line to the outlet-side feedback line so that an at least largely closed second circuit with the absorption process (150) is formed, and a laden solvent from the absorption process (150) is at least partially fed back again into the absorption process (150).

9. Carbon dioxide separation process (90) according to Claim 8, wherein heat is transferred from a regenerated solvent of the desorption process (160) to a laden solvent of the absorption process (160).

10. Carbon dioxide separation process (90) according to Claim 8 or 9, wherein between 80% and 98% of the regenerated solvent from the desorption process (160) is fed back again via the first bypass (130) into the desorption process (160), and between 2% and 20% is fed to the absorption process (150), so that heat is introduced into the absorption process (150), and wherein between 80% and 98% of the laden solvent from the absorption process (150) is fed back again via the second bypass (140) into the absorption process (150), and between 2% and 20% is fed to the desorption process (160).

11. Carbon dioxide separation process (90) according to Claim 8 or 9, wherein the regenerated solvent from the desorption process (160) is fed back again completely via the first bypass (130) into the desorption process (160), and the laden solvent from the absorption process (150) is fed back again completely via the second bypass (140) into the absorption process (150), and wherein the regenerated solvent exchanges heat with the laden solvent so that the laden solvent is heated.

12. Carbon dioxide separation process (90) according to one of Claims 8 to 11, wherein as a result of the special operating state (120) an average temperature (T₁₀) of between 30°C and 70°C is established in the absorber of the absorption process (150), and an average temperature (T₂₀) of between 80°C and 120°C is established in the desorber of the desorption process (160).

13. Carbon dioxide separation process (90) according to one of Claims 8 to 12, wherein an amino-acid salt solution is used as the solvent.

14. Carbon dioxide separation process (90) according to one of Claims 8 to 13, wherein in addition the flow rate (M) of the laden solvent in the absorption process (150) and/or of the regenerated solvent in the desorption process (160) is reduced in the special operating state (120) compared with the normal operating state (110).

15. Carbon dioxide separation process (90) according to one of Claims 8 to 14, wherein no cooling of the solvent which is introduced into the absorption process (150) is carried out in the special operating state (120) compared with the normal operating state (110).

16. Carbon dioxide separation process (90) according to one of Claims 8 to 15, wherein the special operating state (120) can be operated when the fossil-fueled power station process is completely or partially shut down.

17. Use of the carbon dioxide separation process (90) according to one of Claims 8 to 16 in a fossil-fueled power station.

## Revendications

1. Dispositif (1) de séparation du dioxyde de carbone, comprenant une unité ( 2 ) d'absorption pour absorber du gaz de fumée d'une centrale électrique à combustible fossile, une unité ( 4 ) de désorption et un échangeur de chaleur ( 5 ), l'échangeur de chaleur ( 5 ) communiquant du côté primaire avec l'unité ( 4 ) de désorption par un conduit ( 6 ) de retour du côté de l'entrée et avec l'unité ( 2 ) d'absorption par un conduit ( 7 ) de retour du côté de la sortie et communiquant du côté secondaire par un conduit ( 8 ) d'apport du côté de l'entrée avec l'unité ( 2 ) d'absorption et par un conduit ( 9 ) d'apport du côté de la sortie avec l'unité ( 4 ) de désorption, **caractérisé en ce qu'**il est prévu un conduit ( 10 ) de dérivation, qui met le conduit ( 6 ) de retour du côté de l'entrée en communication avec le conduit ( 9 ) d'apport du côté de la sortie, de manière à former avec l'unité ( 4 ) de désorption un premier circuit fermé au moins dans une grande mesure et **en ce qu'**il est prévu un deuxième conduit ( 11 ) de dérivation, qui met le conduit ( 8 ) d'apport du côté de l'entrée en communication avec le conduit ( 7 ) de retour du côté de la sortie, de manière à former avec l'unité ( 2 ) d'absorption un deuxième circuit fermé au moins dans une grande mesure.

2. Dispositif ( 1 ) de séparation suivant la revendication 1, **caractérisé en ce qu'**un premier échangeur de chaleur ( 12 ) auxiliaire est monté dans le premier conduit ( 10 ) de dérivation.

3. Dispositif ( 1 ) de séparation suivant la revendication 1 ou 2, **caractérisé en ce qu'**un deuxième échangeur de chaleur ( 13 ) auxiliaire est monté dans le deuxième conduit ( 11 ) de dérivation.

4. Dispositif ( 1 ) de séparation suivant la revendication 3, **caractérisé en ce que** le premier échangeur de chaleur ( 12 ) auxiliaire du premier conduit ( 10 ) de dérivation communique avec le deuxième échangeur de chaleur ( 13 ) auxiliaire du deuxième conduit ( 11 ) de dérivation de manière à pouvoir transmettre de la chaleur du premier échangeur de chaleur ( 12 ) auxiliaire au deuxième échangeur de chaleur ( 13 ) auxiliaire.

5. Dispositif ( 1 ) de séparation suivant l'une des revendications 1 à 4, **caractérisé en ce qu'**une première vanne ( 14 ) est montée dans le premier conduit ( 10 ) de dérivation et **en ce qu'**une deuxième vanne ( 15 ) est montée dans le deuxième conduit de dérivation.

6. Centrale électrique à combustible fossile, conformée en centrale à vapeur, comprenant une chaudière alimentée en combustible fossile, une turbine à vapeur fonctionnant par la vapeur de la chaudière, une génératrice entraînée par la turbine à vapeur par l'intermédiaire d'un arbre, et un dispositif ( 1 ) de séparation du dioxyde de carbone suivant l'une des revendications 1 à 5 monté en aval du côté des gaz d'échappement de la chaudière.

7. Centrale électrique à combustible fossile, conformée en centrale à gaz et à vapeur, comprenant une turbine à gaz alimentée en combustible fossile, un générateur de vapeur à récupération de la chaleur perdue, monté dans le canal de récupération de la chaleur perdue de la turbine à gaz, une turbine à vapeur fonctionnant par la vapeur du générateur de vapeur à récupération de la chaleur, au moins une génératrice entraînée par la turbine à gaz et par la turbine à vapeur par l'intermédiaire d'un arbre et un dispositif (1) de séparation du dioxyde de carbone suivant l'une des revendications 1 à 5 monté en aval du côté des gaz d'échappement de la turbine à gaz.

8. Opération ( 90 ) de séparation du dioxyde de carbone pour une opération à centrale électrique alimentée en combustible fossile, comprenant un opération ( 150 ) d'absorption, une opération ( 160 ) de désorption et un échangeur de chaleur, l'échangeur de chaleur communiquant du côté primaire avec l'opération ( 160 ) de désorption par l'intermédiaire d'un conduit de retour du côté de l'entrée et communiquant avec l'opération ( 150 ) d'absorption par l'intermédiaire d'un conduit de retour du côté de la sortie et communiquant du côté secondaire par l'intermédiaire d'un conduit d'apport du côté de l'entrée avec l'opération ( 150 ) d'absorption et par l'intermédiaire d'un conduit d'apport du côté de la sortie avec l'opération ( 160 ) de désorption, dans laquelle, dans un état de fonctionnement particulier s'écartant de l'état ( 110 ) de fonctionnement normal,
- on libère une première dérivation ( 130 ), qui met le conduit de retour du côté de l'entrée en communication avec le conduit d'apport du côté de la sortie, de manière à former avec l'opération ( 160 ) de désorption un premier circuit fermé au moins dans une grande mesure et on retourne un solvant régénéré de l'opération ( 160 ) de désorption au moins en partie à l'opération ( 160 ) de désorption,
- on libère une deuxième dérivation ( 140 ), qui met le conduit d'apport du côté de l'entrée en communication avec le conduit de retour du côté de la sortie de manière à former avec l'opération ( 150 ) d'absorption un deuxième circuit fermé au moins dans une grande mesure et on retourne un solvant chargé de l'opération ( 150 ) d'absorption au moins en partie à l'opération ( 150 ) d'absorption.

9. Opération ( 90 ) de séparation du dioxyde de carbone, suivant la revendication 8, dans laquelle on transmet de la chaleur d'un solvant régénéré de l'opération ( 160 ) de désorption à un solvant chargé de l'opération ( 160 ) d'absorption.

10. Opération ( 90 ) de séparation du dioxyde de carbone, suivant la revendication 8 ou 9, dans laquelle on retourne entre 80 % et 98 % du solvant régénéré de l'opération ( 160 ) de désorption par la première dérivation ( 130 ) à l'opération ( 160 ) de désorption et on en envoie entre 2 % et 20 % à l'opération ( 160 ) d'absorption de manière à introduire de la chaleur dans l'opération ( 150 ) d'absorption et dans laquelle on retourne de l'opération ( 150 ) d'absorption par la deuxième dérivation ( 140 ) à l'opération ( 150 ) d'absorption entre 80 % et 98 % du solvant chargé et on en envoie entre 2 % et 20 % à l'opération ( 160 ) de désorption.

11. Opération ( 90 ) de séparation du dioxyde de carbone, suivant la revendication 8 ou 9, dans laquelle on retourne le solvant régénéré de l'opération ( 160 ) de désorption entièrement par la première dérivation ( 130 ) à l'opération ( 160 ) de désorption et on retourne le solvant chargé de l'opération ( 150 ) d'absorption entièrement par la deuxième dérivation ( 140 ) à l'opération (150) d'absorption et dans laquelle on fait échanger de la chaleur entre le solvant régénéré et le solvant chargé de manière à réchauffer le solvant chargé.

12. Opération ( 90 ) de séparation du dioxyde de carbone suivant l'une des revendications 8 à 11, dans laquelle on établit par l'état ( 120 ) de fonctionnement particulier dans l'absorbeur de l'opération ( 150 ) d'absorption une température ( T₁₀ ) moyenne comprise entre 30°C et 70°C et on établit dans le désorbeur de l'opération ( 160 ) de désorption une température ( T₂₀ ) moyenne comprise entre 80° et 120°C.

13. Opération ( 90 ) de séparation du dioxyde de carbone suivant l'une des revendications 8 à 12, dans laquelle on utilise une solution de sel d'acides aminés comme solvant.

14. Opération ( 90 ) de séparation du dioxyde de carbone suivant l'une des revendications 8 à 13, dans laquelle, dans l'état ( 120 ) de fonctionnement particulier, on réduit par rapport à l'état ( 110 ) de fonctionnement normal, en outre, le débit ( M ) du solvant chargé dans l'opération ( 150 ) d'absorption et/ou du solvant régénéré dans l'opération ( 160 ) de désorption.

15. Opération ( 90 ) de séparation du dioxyde de carbone suivant l'une des revendications 8 à 14, dans laquelle, dans l'état ( 120 ) de fonctionnement particulier, on n'effectue pas, par rapport à l'état ( 110 ) de fonctionnement normal, de refroidissement du solvant envoyé à l'opération ( 150 ) d'absorption.

16. Opération ( 90 ) de séparation du dioxyde de carbone suivant l'une des revendications 8 à 15, dans laquelle on passe à l'état ( 120 ) de fonctionnement particulier si l'opération à centrale alimentée en combustible fossile fonctionne à puissance réduite en tout ou partie.

17. Utilisation de l'opération ( 90 ) de séparation du dioxyde de carbone suivant l'une des revendications 8 à 16 dans une centrale électrique à combustible fossile.
